# DEMANDE DE BREVET EUROPEEN

(11) **EP 2 544 105 A1**
(43) Date de publication de la demande: **09.01.2013**
(21) Numéro de dépôt: 12174807.3
(22) Date de dépôt: 03.07.2012
(51) Int. Cl.: G06F 17/30

(54) **Procédé automatique d'acquisition de données**

(30) Priorité: 05.07.2011 FR 1156073
(71) Demandeur: Jost, Pierre, 94410 Saint Maurice (FR); Maisonnave-Couterou, Xavier, 77520 Mons en Montois (FR)
(72) Inventeur: Jost, Pierre, 94410 Saint Maurice (FR); Maisonnave-Couterou, Xavier, 77520 Mons en Montois (FR)
(74) Mandataire: Cabinet Plasseraud

(57) **Abrégé**

Procédé d'acquisition de données comprenant au moins les étapes suivantes:
- une étape de capture de code au cours de laquelle on capture une représentation d'un diagramme codé (3) dans lequel est encodé au moins un premier code représentatif d'un produit ou service et un deuxième code relatif à un utilisateur,
- une étape d'acquisition de données au cours de laquelle on acquiert automatiquement des données d'un centre de traitement de données distant (7), en fonction des premier et deuxième codes.

## Description

### DOMAINE DE L'INVENTION

La présente invention est relative aux procédés automatiques d'acquisition de données.

Plus particulièrement, l'invention concerne un procédé d'acquisition de données comprenant au moins les étapes suivantes :
- une étape de capture de code au cours de laquelle on capture une représentation d'un diagramme codé dans lequel est encodé au moins un premier code représentatif d'un produit ou service,
- une étape d'acquisition de données au cours de laquelle on acquiert des données d'un centre de traitement de données distant, en fonction au moins du premier code et de données relatives à l'utilisateur.

### ARRIERE PLAN DE L'INVENTION

Le document WO-A-2008/040949 décrit un exemple d'un tel procédé, dans lequel on photographie le diagramme codé au moyen d'un appareil électronique portatif de l'utilisateur (téléphone intelligent ou organiseur électronique par exemple), puis on acquiert des données par exemple sur Internet, en fonction du premier code et le cas échéant en fonction d'un profil d'utilisateur correspondant à l'appareil électronique utilisé.

Ce procédé connu présente l'inconvénient que le profil d'utilisateur est lié à l'appareil électronique utilisé, ce qui n'est pas toujours souhaitable.

### OBJETS DE L'INVENTION

La présente invention a notamment pour but de pallier cet inconvénient.

A cet effet, l'invention propose un procédé d'acquisition de données comprenant au moins les étapes suivantes :
- une étape de capture de code au cours de laquelle on capture une représentation d'un diagramme codé (c'est-à-dire une image ou un scannage du diagramme codé) dans lequel est encodé au moins un premier code représentatif d'un produit ou service et un deuxième code relatif à un utilisateur,
- une étape d'acquisition de données au cours de laquelle on acquiert automatiquement des données d'un centre de traitement de données distant (par exemple un serveur internet), en fonction des premier et deuxième codes,
**caractérisé en ce qu'**au cours de l'étape de capture, on capture une représentation d'un diagramme codé apposé sur une publication périodique ou un courrier adressé audit utilisateur,
et en ce que ladite publication périodique ou le courrier comporte plusieurs rubriques relatives à plusieurs produits et/ou services et comportant chacune un diagramme codé, et au cours de l'étape de capture, on capture une représentation d'un diagramme codé apposé en regard d'une desdites rubriques.

Grâce à ces dispositions, on permet d'accéder directement à des données distantes profilées en fonction de l'utilisateur concerné par le diagramme codé, et ce indépendamment de l'appareil utilisé pour capturer la représentation du diagramme codé. De plus, la société distributrice de cet objet -par exemple distributeur de presse, société de vente par internet ou par correspondance- peut disposer de données pouvant constituer un profil de l'utilisateur, en fonction par exemple des abonnements et/ou des achats passés de cet utilisateur, ce qui rend l'invention particulièrement intéressante.

Dans différents modes de réalisation du procédé selon l'invention, on peut éventuellement avoir recours en outre à l'une et/ou à l'autre des dispositions suivantes (utilisables éventuellement indépendamment les unes des autres et indépendamment des dispositions précitées) :
- les étapes de capture de code et d'acquisition de données sont mises en oeuvre par un même appareil électronique portatif ayant accès à Internet, les données étant acquises d'un serveur web ou cours de l'étape d'acquisition de données ;
- l'appareil électronique portatif utilisé pour les étapes de capture de code et d'acquisition de données, est choisi parmi un téléphone mobile intelligent, un organiseur électronique et une tablette électronique ;
- l'appareil électronique portatif utilisé pour les étapes de capture de code et d'acquisition de données, comporte un appareil photo numérique utilisé au cours de l'étape de capture de code, pour capturer une image du diagramme codé.

### BREVE DESCRIPTION DES DESSINS

D'autres caractéristiques et avantages de l'invention apparaîtront au cours de la description suivante d'une de ses formes de réalisation, donnée à titre d'exemple non limitatif, en regard du dessin joint.

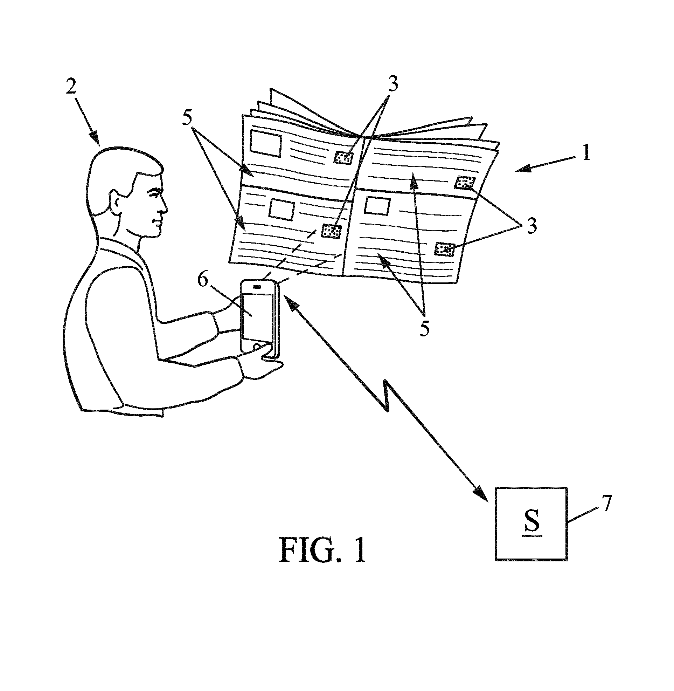

Sur le dessin, la figure 1 est un schéma de principe illustrant le principe de l'invention.

### DESCRIPTION PLUS DETAILLEE

La figure 1 montre un exemple de réalisation de l'invention, dans lequel un objet 1 distribué par correspondance et adressé à un utilisateur 2, porte au moins un diagramme codé ou datagramme 3 (notamment un code barres 1D ou 2D) qui identifie à la fois l'objet (ou un autre produit ou service) et l'utilisateur destinataire de cet objet. Ce mode de réalisation est particulièrement avantageux, puisque la société distributrice de l'objet en question -distributeur de presse, société de vente par internet ou par correspondance- peut disposer de données pouvant constituer un profil de l'utilisateur, en fonction par exemple des abonnements et/ou des achats passés de cet utilisateur.

Eventuellement, l'objet en question peut être par exemple une publication périodique ou un courrier, comportant éventuellement plusieurs rubriques 5 relatives à plusieurs produits et/ou services et comportant chacune un diagramme codé un premier code relatif à la rubrique et un deuxième code relatif à l'utilisateur.

L'utilisateur 2 qui souhaite avoir automatiquement des informations sur l'une des rubriques 5, procède aux étapes suivantes, de préférence en utilisant un téléphone mobile intelligent 6 ("smartphone") ou un organiseur électronique ("pda") ou une tablette électronique, cet appareil étant pourvu d'une connexion Internet et d'un appareil photo numérique :
- une étape de capture de code au cours de laquelle on capture une représentation du diagramme codé (notamment en prenant une photo à l'aide de l'appareil photo numérique de l'appareil 6) dans lequel est encodé au moins un premier code représentatif d'un produit ou service et un deuxième code relatif à un utilisateur,
- une étape d'acquisition de données au cours de laquelle l'appareil 5 acquiert automatiquement des données d'un centre de traitement de données distant (par exemple un serveur internet 7 (S)), en fonction des premier et deuxième codes.

Grâce à ces dispositions, on permet d'accéder directement à des données distantes profilées en fonction de l'utilisateur concerné par le diagramme codé, et ce indépendamment de l'appareil utilisé pour capturer la représentation du diagramme codé.

## Revendications

1. Procédé d'acquisition de données comprenant au moins les étapes suivantes :
- une étape de capture de code au cours de laquelle on capture une représentation d'un diagramme codé (3) dans lequel est encodé au moins un premier code représentatif d'un produit ou service et un deuxième code relatif à un utilisateur,
- une étape d'acquisition de données au cours de laquelle on acquiert automatiquement des données d'un centre de traitement de données distant (7), en fonction des premier et deuxième codes,
**caractérisé en ce qu'**au cours de l'étape de capture, on capture une représentation d'un diagramme codé apposé sur une publication périodique (2) ou un courrier adressé audit utilisateur,
**et en ce que** ladite publication périodique ou le courrier comporte plusieurs rubriques (5) relatives à plusieurs produits et/ou services et comportant chacune un diagramme codé, et au cours de l'étape de capture, on capture une représentation d'un diagramme codé apposé en regard d'une desdites rubriques.

2. Procédé selon la revendication 1, dans lequel les étapes de capture de code et d'acquisition de données sont mises en oeuvre par un même appareil électronique portatif (6) ayant accès à Internet, les données étant acquises d'un serveur web ou cours de l'étape d'acquisition de données.

3. Procédé selon la revendication 2, dans lequel l'appareil électronique portatif (6) utilisé pour les étapes de capture de code et d'acquisition de données, est choisi parmi un téléphone mobile intelligent, un organiseur électronique et une tablette électronique.

4. Procédé selon la revendication 2 ou la revendication 3, dans lequel l'appareil électronique portatif (6) utilisé pour les étapes de capture de code et d'acquisition de données, comporte un appareil photo numérique utilisé au cours de l'étape de capture de code, pour capturer une image du diagramme codé.
